# EUROPEAN PATENT APPLICATION

(11) **EP 4 299 297 A1**
(43) Date of publication of application: **03.01.2024**
(21) Application number: 22209048.2
(22) Date of filing: 23.11.2022
(51) Int. Cl.: B29D 11/00, G02C 7/04, D06P 1/00, C09D 11/00, G02B 1/04

(54) **COLOR FIXING COMBINATION FOR CONTACT LENS, CONTACT LENS AND METHOD OF MANUFACTURING THEREOF**

(30) Priority: 29.06.2022 TW 111124245
(71) Applicant: Pegavision Corporation, Taoyuan City 333 (TW)
(72) Inventor: HUANG, Ying-Jhen, TAOYUAN CITY 333 (TW); LEE, Po-Tsung, TAOYUAN CITY 333 (TW)
(74) Representative: Winter, Brandl - Partnerschaft mbB

(57) **Abstract**

A color fixing combination for contact lens with pearlescent is provided, including a pearlescent powder and an adjuvant. The adjuvant includes at least two of the following: alcohols, amines, ketones, alkenes, esters, resins, polyamides, celluloses, polyacids, ammonium salts, phosphoric acids, alkene acids, or silanes, so that the pearlescent powder stably adheres to the lens to form a pattern layer.

## Description

### BACKGROUND

### Field of Invention

The present disclosure relates to color fixing combination, contact lens, and method of manufacturing thereof. More particularly, the present disclosure relates to color fixing combination with pearlescent, contact lens, and method of manufacturing thereof.

### Description of Related Art

With the increasing popularity of contact lenses, the wearing comfort of contact lenses has become more and more important to wearers. Because the contact lens made of hydrogel can keep eyes hydrated, even if the wearer wear for a long time, the cornea has enough water content and it is not easy to cause eye discomfort because of corneal dryness. Therefore, hydrogel has become one of the great ingredients for contact lens. In addition, the lens of the silicone hydrogel contact lens contains silicone compound, so the silicone hydrogel contact lens has high oxygen permeability. Sufficient oxygen can pass directly through the lens and contact the cornea, so that the cornea has sufficient oxygen content. Accordingly, even if the silicone hydrogel contact lens is worn for a long time, the symptoms of eye discomfort caused by corneal hypoxia are less likely to occur.

In addition to the wearing comfort of the contact lens, shiny and discoloration effect after wearing the contact lens are also considered more and more important to the wearers. This kind of contact lens can be designed for iris and sclera with special patterns or shiny. However, the preparation method of the pigments that cause the shiny and discolored appearance effects still has the stability and safety issue of the pigments in the contact lens body. Therefore, the related art needs to be improved.

### SUMMARY

The present disclosure provides a color fixing combination for contact lens, comprising a pearlescent powder and an adjuvant. The adjuvant comprises at least two of: alcohols, amines, ketones, alkenes, esters, resins, polyamides, celluloses, polyacids, ammonium salts, phosphoric acids, alkene acids, or silanes.

In some embodiments, the adjuvant further comprises a solvent, a thickener, a hydrophilic polymer, and a dispersant. The solvent comprising alcohols, amines, ketones, alkenes, esters, or a combination thereof. The thickener comprising polyacrylate, polymethacrylate, polystyrene and its derivatives, polyamides, or a combination thereof. The hydrophilic polymer comprising polyvinyl alcohol, cellulose and its derivatives, polyethylene alcohol, polyvinylpyrrolidone and its copolymer, hydroxyapatite, or a combination thereof. The dispersant comprising polyacids, ammonium salts, phosphoric acids, alkene acids, silanes, or a combination thereof.

In some embodiments, the polyacids comprises polycarboxylic acid; the ammonium salts comprises alkyl trimethyl benzyl ammonium salt, dialkyl dimethyl ammonium salt, or alkylammonium salt; the phosphoric acids comprises phosphoric acid ester, trisodium phosphate, or sodium pyrophosphate; the alkene acids comprises acrylic ester or ethylene glycol dimethacrylate; and the silanes comprises vinyltrimethoxysilane, triethoxyvinylsilane, or triisopropoxyvinylsilane.

In some embodiments, the pearlescent powder comprises mica, calcium aluminum borosilicate, aluminum oxide, or silicon dioxide as a substrate, and a surface of the substrate is covered with titanium dioxide, iron oxide, tin oxide, or a combination thereof.

In some embodiments, the pearlescent powder has a weight percentage from 5% to 40% and the adjuvant has a weight percentage from 60% to 95%, based on a total weight (100% by weight) of the color fixing combination.

In some embodiments, the color fixing combination for contact lens further comprises an inorganic color powder, an organic color powder, or a combination thereof.

In some embodiments, the inorganic color powder comprises a titanium dioxide color powder, a titanium-phenol color powder, an iron oxide color powder, or a combination thereof.

In some embodiments, the pearlescent powder has a weight percentage from 15% to less than 40%, the inorganic color powder has a weight percentage from 1% to 20%, and the adjuvant has a weight percentage from 40% to 85%, based on a total weight (100% by weight) of the color fixing combination.

In some embodiments, the organic color powder comprises a disazo color powder, a monoazo color powder, a phthalocyanine color powder, a triphenodioxazine color powder, or a combination thereof.

In some embodiments, the pearlescent powder has a weight percentage from 15% to 40%, the organic color powder has a weight percentage from 1% to 4%, and the adjuvant has a weight percentage from 40% to 85%, based on a total weight (100% by weight) of the color fixing combination.

In some embodiments, the pearlescent powder has a weight percentage from 10% to 30%, the inorganic color powder has a weight percentage from 1% to 30%, the organic color powder has a weight percentage from 1% to 4%, and the adjuvant has a weight percentage from 40% to 85%, based on a total weight (100% by weight) of the color fixing combination.

The present disclosure also provides a method of manufacturing pearlescent lens, comprising steps of: providing a color fixing combination as above mentioned; filling the color fixing combination in to a template to form a colloid layer; printing the colloid layer into a first mold to form a pattern layer after curing; injecting a composition into the first mold and covering the pattern layer; and curing the pattern layer and the composition to form the pearlescent lens.

In some embodiments, the composition comprises hydrogel or silicone hydrogel.

In some embodiments, after the step of injecting a composition into the first mold and covering the pattern layer, the method further comprises clamping a second mold and the first mold.

In some embodiments, the pattern layer corresponds to an eye of iris, sclera, or a combination thereof.

In some embodiments, the pattern layer is a random pattern.

In some embodiments, the pattern layer is a non-random pattern.

In some embodiments, the step of curing the pattern layer and the composition comprises curing the pattern layer and the composition by ultraviolet curing or thermal curing.

The present disclosure also provides a contact lens having pearlescent with color fixing combination, comprising a lens body and a pattern layer. The pattern layer covers the lens body, in which the pattern layer is formed by curing the color fixing combination as above mentioned.

In some embodiments, the pattern layer corresponds to an eye of iris, sclera, or a combination thereof.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion. The disclosure can be more fully understood by reading the following detailed description of the embodiment, with reference made to the accompanying drawings as follows:

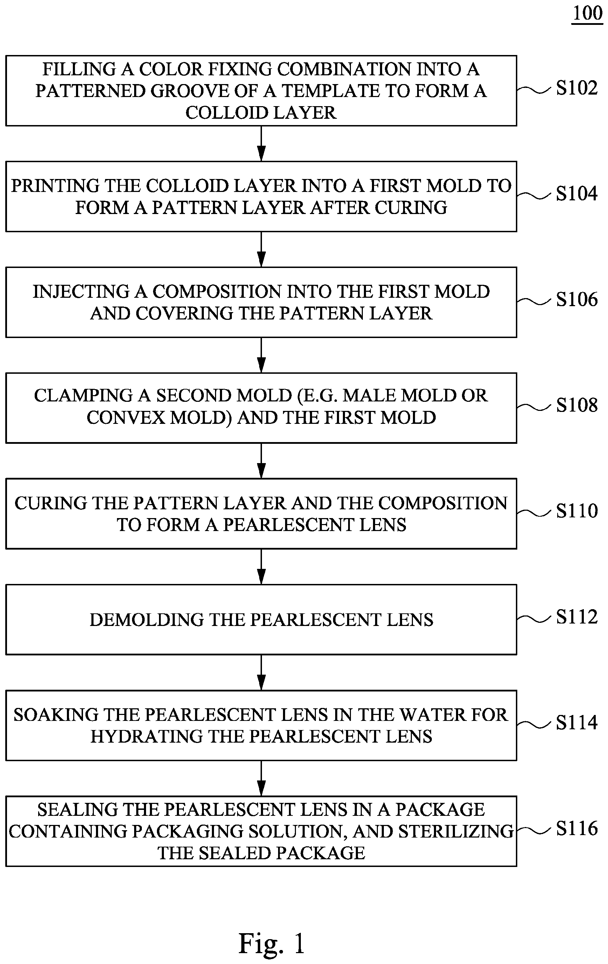

Fig. 1 is a flow chart showing a method of manufacturing a pearlescent lens according to an embodiment of the present disclosure.

### DETAILED DESCRIPTION

The following disclosure provides detailed description of many different embodiments, or examples, for implementing different features of the provided subject matter. These are, of course, merely examples and are not intended to limit the invention but to illustrate it. In addition, various embodiments disclosed below may combine or substitute one embodiment with another, and may have additional embodiments in addition to those described below in a beneficial way without further description or explanation. In the following description, many specific details are set forth to provide a more thorough understanding of the present disclosure. It will be apparent, however, to those skilled in the art, that the present disclosure may be practiced without these specific details.

Further, spatially relative terms, such as "beneath," "over" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising", or "includes" and/or "including" or "has" and/or "having" when used in this specification, specify the presence of stated features, regions, integers, steps, operations, elements, and/or components, but do not preclude the presence or addition of one or more other features, regions, integers, steps, operations, elements, components, and/or groups thereof.

A number of examples are provided herein to elaborate the color fixing combination with pearlescent, contact lens, and method of manufacturing thereof of the present disclosure. However, the examples are for demonstration purpose alone, and the instant disclosure is not limited thereto.

As used herein, "pearlescent" can also include various metallic colors or jewelry shiny luster in addition to pearl luster. For example: jewelry gold of pearlescent powder exhibits as a pearly luster with a golden jewelry; carbon black of pearlescent powder exhibits as a black pearl luster; silver white of pearlescent powder exhibits as a silvery pearl luster; gold of pearlescent powder exhibits as golden pearl luster; light gold of pearlescent powder exhibits as light golden pearl luster; red/copper/gold of pearlescent powder has a peach purple pearl luster; brown of pearlescent powder exhibits as a copper-brown pearl luster; purple of pearlescent powder exhibits as lavender pearl luster; deep purple of pearlescent powder exhibits as a deep purple pearl luster; or blue of pearlescent powder is blue pearly luster.

In the present disclosure, the pearlescent powder is stably adhered to the colored layer of the lens through a color fixing system to increase wearing safety, and at the same time, lens exhibits specific patterns and colors by the color fixing combination.

In some embodiments, color fixing combination includes a pearlescent powder and an adjuvant.

### Pearlescent powder

In some embodiments, pearlescent powder includes mica, titanium dioxide, silicon dioxide, iron oxide, aluminum oxide, calcium aluminum borosilicate, tin oxide, the like, or a combination thereof. In detail, pearlescent powder is also called pearlescent pigment, and is mainly formed by coating the substrate with oxide. The thickness and ratio of the oxide coating will affect the color, and different substrates and different oxides show different gloss and effects.

In some embodiments, the substrates can be divided into the following categories.
1. Natural substrate - mica: natural mica is a natural mineral that is used as a substrate for pearlescent powder. Because of its chemical and mechanical properties, mica is suitable as the substrate for gloss effect powder.
2. Synthetic substrates: the effects provided by synthetic substrates are primarily based on the precise control of chemical purity and particle shape during the manufacturing process. Synthetic substrates are characterized by a smooth and regular surface and a pure white powder color. In one embodiment, the synthetic mica (synthetic fluorophlogopite), in addition to having a pure white powder color, exhibits high brightness properties because of precise control of the substrate and powder.
3. Silicon dioxide: the thickness distribution of the synthetic silicon dioxide flakes is very uniform, and each silicon dioxide flake has the same thickness. The characteristic of the powder made of this substrate is that it can refract different colors (i.e., interference colors) according to different angles.
4. Flake aluminum oxide: aluminum oxide flake can provide a special sparkle effect. Because of the narrow pearl particle size distribution (5 microns to 40 microns) of the aluminum oxide substrate, and the high reflectivity of the surface to light, aluminum oxide flake exhibits a crystal-like high shiny effect. The aluminum oxide substrate has an obvious pure white tone, which is conducive to formulate a silver-white color with interference color effects.
5. Calcium boroaluminosilicate: calcium boroaluminosilicate is a substrate for achieving pure and brilliant color effects. Pearlescent based on this substrate provides bright colors with high transparency.
6. Bismuth oxychloride: bismuth oxychloride has different pearlescent effects depending on the aspect ratio and crystal size. Bismuth oxychloride exhibits a silvery-white pearlescent effect.

In some embodiments, pearlescent powder includes mica, titanium dioxide, silicon dioxide, iron oxide, aluminum oxide, calcium aluminum borosilicate, tin oxide, the like, or a combination thereof. In some examples, pearlescent powder includes: calcium aluminum borosilicate 47-73% (Cas No: 65997-17-3), silicon dioxide 8-18% (Cas No: 7631-86-9), titanium dioxide 16-26% (Cas No: 13463-67-7), iron oxide3-7%, and tin oxide<2% (Cas No: 18282-10-5); iron oxide 46-54% (Cas No: 1317-61-9), mica36-50% (Cas No: 12001-26-2), and titanium dioxide 4-10% (Cas No: 13463-67-7); iron oxide 55-70% (iron oxide black 54-70% (Cas No: 1317-61-9)and iron oxide red <1% (Cas No: 1309-37-1), aluminum oxide 27-45% (Cas No: 1344-28-1), and silicon dioxide <3% (Cas No: 7631-86-9); synthetic mica (fluorophlogopite) 75-88% (Cas No: 12003-38-2), titanium dioxide 11-21% (Cas No: 13463-67-7), and tin oxide 1-4% (Cas No: 18282-10-5); mica 72-84% (Cas No: 12001-26-2), titanium dioxide 12-19% (Cas No: 13463-67-7), iron oxide 4-8% (Cas No: 1309-37-1), and tin oxide <1% (Cas No: 18282-10-5); calcium aluminum borosilicate 66-81% (Cas No: 65997-17-3), silicon dioxide 2-6% (Cas No: 7631-86-9), titanium dioxide 17-27% (Cas No: 13463-67-7), and tin oxide <1% (Cas No: 18282-10-5); titanium dioxide 33-44% (Cas No: 13463-67-7), silicon dioxide 30-40% (Cas No: 7631-86-9), mica 15-37% (Cas No: 12001-26-2), and tin oxide <1% (Cas No: 18282-10-5); mica 60-68% (Cas No: 12001-26-2) and iron oxide 32-40% (Cas No: 1309-37-1); titanium dioxide 49-59% (Cas No: 13463-67-7), silicon dioxide 12-16% (Cas No: 7631-86-9), and mica 25-39% (Cas No: 12001-26-2); silicon dioxide 81-90% (Cas No: 7631-86-9), titanium dioxide 8-14% (Cas No: 13463-67-7), and tin oxide 2-5% (Cas No: 18282-10-5); and, titanium dioxide 29-39% (Cas No: 13463-67-7), silicon dioxide 29-37% (Cas No: 7631-86-9), mica 23-42% (Cas No: 12001-26-2), and tin oxide <1% (Cas No: 18282-10-5).

### Adjuvant

In some embodiments, the adjuvant includes solvent, thickener, hydrophilic polymer, and dispersant.

In some examples, the solvent includes, but is not limited to one or more of alcohols, amines, ketones, alkenes, and esters. For example, the solvent includes: ethanol, glycerol, diethylene glycol, N-methylpyrrolidone, dimethylacetamide, and dimethylformamide, etc. The adjuvant contains 30 wt% to 90 wt% of the solvent, based on a total weight (100% by weight) of the adjuvant. For example, 30 wt%, 35 wt%, 40 wt%, 45 wt%, 50 wt%, 55 wt%, 60 wt%, 65 wt%, 70 wt%, 75 wt%, 80 wt%, 85 wt%, 90 wt%, or any value between any two of these values of the solvent.

In some examples, the thickener includes, but is not limited to resins. For example, the thickener includes one or more of: polyacrylate, polymethacrylate, polystyrene and its derivatives, and polyamides. The content of thickener is from 1 wt% to 60 wt%; for example, from 15 wt% to 50wt%, such as 15 wt%, 20 wt%, 25 wt%, 30 wt%, 35 wt%, 40 wt%, 45 wt%, 50 wt%, or any value between any two of these values. If the content of the thickener is less than 1%, the viscosity properties of the color fixing combination are adversely affected and cannot be fixed to a specific position on the lens body. If the content of thickener is more than 60%, the color fixing combination will adversely affect the manufacturing process of contact lens because of excessive viscosity.

In some examples, hydrophilic polymer includes, but is not limited to one or more of polyvinyl alcohol, cellulose and its derivatives, polyethylene alcohol, polyvinylpyrrolidone and its copolymer, and hydroxyapatite. For example, polyvinyl alcohol can be a polymer with a degree of polymerization form 500 to 10,000. Cellulose may have a molecular weight from 5,000 to 500,000. The polyethylene alcohol may have a molecular weight from 500 to 500,000. The polyvinylpyrrolidone may have a molecular weight between 5,000 and 1.5 million. The content of the hydrophilic polymer is from 1% to 45%, e.g., from 5% to 40%. If the content of the hydrophilic polymer is less than 1%, the viscosity characteristics of the color fixing combination will be adversely affected, and it cannot be fixed in a specific position on the lens body; if the content of hydrophilic polymer is more than 45%, it will adversely affect the manufacturing process of contact lens because of excessive viscosity. In addition, the content of hydrophilic polymer will also affect the wearing comfort of contact lens.

In some examples, dispersant includes, but is not limited to polyacids, ammonium salts, phosphoric acids, alkene acids, silanes, or a combination thereof. For example, dispersant at least includes polyacids, ammonium salts, phosphoric acids, alkene acids, silanes, or a combination thereof which can be selectively added. Wherein polyacids is polycarboxylic acid; ammonium salts is alkyl trimethyl benzyl ammonium salt, dialkyl dimethyl ammonium salt, or alkylammonium salt; phosphoric acids is phosphoric acid ester, trisodium phosphate, or sodium pyrophosphate; alkene acids is acrylic ester or ethylene glycol dimethacrylate; silanes is one or more of vinyltrimethoxysilane, triethoxyvinylsilane, and triisopropoxyvinylsilane.

### Preparation of color fixing combination

In some embodiments, the pearlescent powder and the adjuvant were mixed. For example, the pearlescent powder and adjuvant were fully stirred and mixed to obtain a color fixing combination. In some examples, the pearlescent powder has a weight percentage from 5% to 40%, the adjuvant has a weight percentage from 60% to 95%, so that the color fixing combination keeps the flow state without solidification. For example, the weight percentage of the pearlescent powder is 5%, 10%, 15%, 20%, 25%, 30%, 35%, 40%, or any value between any two of these values. The weight percentage of the adjuvant is 60%, 65%, 70%, 75%, 80%, 85%, 90%, 95%, or any value between any two of these values.

In some embodiments, the pearlescent powder, the inorganic color powder, and the adjuvant were mixed. The inorganic color powder includes, but is not limited to a titanium dioxide color powder, a titanium-phenol color powder, or an iron oxide color powder. In some examples, the pearlescent powder has a weight percentage from 15% to less than 40%, the inorganic color powder has a weight percentage from 1% to 20%, and the adjuvant has a weight percentage from 40% to 84%. For example, the weight percentage of the pearlescent powder is 15%, 20%, 25%, 30%, 35%, 40%, or any value between any two of these values; the weight percentage of the inorganic color powder is 1%, 2%, 3%, 4%, 5%, 7%, 10%, 15%, 20%, or any value between any two of these values; the weight percentage of the adjuvant is 40%, 45%, 50%, 55%, 60%, 65%, 70%, 75%, 80%, 84%, or any value between any two of these values. Under this weight ratio, the color fixing combination keeps the flow state without solidification.

In some embodiments, the pearlescent powder, organic color powder and the adjuvant were mixed. The organic color powder includes, but is not limited to a disazo color powder, a monoazo color powder, or a phthalocyanine color powder. In some examples, the pearlescent powder has a weight percentage from 15% to 40%, the organic color powder has a weight percentage from 1% to 4%, and the adjuvant has a weight percentage from 56% to 84%. For example, the weight percentage of the pearlescent powder is 15%, 20%, 25%, 30%, 35%, 40%, or any value between any two of these values; the weight percentage of the organic color powder is 1%, 2%, 3%, 4%, or any value between any two of these values; the weight percentage of the adjuvant is 56%, 60%, 65%, 70%, 75%, 80%, 84%, or any value between any two of these values. Under this weight ratio, the color fixing combination keeps the flow state without solidification.

In some embodiments, the pearlescent powder, inorganic color powder, organic color powder, and the adjuvant were mixed. The inorganic color powder includes, but is not limited to a titanium dioxide color powder, a titanium-phenol color powder, or an iron oxide color powder. The organic color powder includes, but is not limited to a disazo color powder, a monoazo color powder, or a phthalocyanine color powder. In some examples, the pearlescent powder has a weight percentage from 10% to 30%, the inorganic color powder has a weight percentage from 1% to 30%, the organic color powder has a weight percentage from 1% to 4%, and the adjuvant has a weight percentage from 40% to 85%. For example, the weight percentage of the pearlescent powder is 10%, 15%, 20%, 25%, 30%, or any value between any two of these values; the weight percentage of the inorganic color powder is 1%, 2%, 3%, 4%, 5%, 7%, 10%, 15%, 20%, 25%, 30%, or any value between any two of these values; the weight percentage of the organic color powder is 1%, 2%, 3%, 4%, or any value between any two of these values; the weight percentage of the adjuvant is 40%, 45%, 50%, 55%, 60%, 65%, 70%, 75%, 80%, 85%, or any value between any two of these values. Under this weight ratio, the color fixing combination keeps the flow state without solidification.

### Contact lens

In some embodiments, the composition of the contact lens includes a lens body, and the lens body is mainly prepared from a composition composed of silicone hydrogel and/or hydrogel, and can be molded at one time by molding method, but the present disclosure is not limited thereto. In some examples, the hydrogel can improve the wettability and surface lubricity of the lens body, thereby improving wearing comfort. Suitable hydrogels can be nonionic polymers with low water content (water content less than 50% by weight) classified by the US Food and Drug Administration (FDA) as Group 1, including: Helfilcon A&B, Hioxifilcon B, Mafilcon, Polymacon, Tefilcon and Tetrafilcon A. Suitable hydrogels can also be nonionic polymers with high water content (water content greater than 50% by weight) classified by the FDA to Group 2, including: Acofilcon A, Alfafilcon A, Hilafilcon B, Hioxifilcon A, Hioxifilcon B. Hioxifilcon D, Nelfilcon A, Nesofilcon A, Omafilcon A, and Samfilcon A. Suitable hydrogels can also be ionic polymers with low water content (water content less than 50% by weight) classified by the FDA as Group 3, including Deltafilcon A and the like. Suitable hydrogels can also be ionic polymers with high water content (water content greater than 50% by weight) classified by the FDA to Group 4, including: Etafilcon A, Focofilcon A, Methafilcon A, Methafilcon B, Ocufilcon A, Ocufilcon B, Ocufilcon C, Ocufilcon D, Ocufilcon E, Phemfilcon A, and Vifilcon A.

In some examples, the silicone hydrogel can improve the oxygen permeability of the lens body, thereby avoiding the situation of corneal hypoxia. Suitable silicone gels can be materials classified by the FDA into Group 5, including: Balafilcon A, Comfilcon A, Efrofilcon A, Enfilcon A, Galyfilcon A, Lotrafilcon A, Lotrafilcon B, Narafilcon A, Narafilcon B, Senofilcon A, Delefilcon A, and Somofilcon A. If necessary, other beneficial ingredients can be added to the silicone lens body such as blue light and UV absorber.

### Method of manufacturing pearlescent lens

Please refer to Fig. 1, Fig. 1 is a flow chart showing a method of manufacturing a pearlescent lens according to an embodiment of the present disclosure. The method 100 of manufacturing pearlescent lens comprises steps of: Step 102, filling a color fixing combination into a patterned groove of a template to form a colloid layer. In some examples, the color fixing combination was filled into the patterned groove of the template, and waited for a period of time, so that the color fixing combination formed the colloidal layer in the patterned groove. In some examples, the template may be a steel plate, and the patterned groove thereof may be formed by laser engraving, but the present disclosure is not limited thereto. Step 104, printing the colloid layer into a first mold (e.g. female mold or concave mold) to form a pattern layer after curing. In some examples, the colloidal layer was printed on the female mold with an appropriate pressure. In some examples, if the pattern layer uses more than one color, that is, the pattern layer includes a plurality of color layers, it may be necessary to perform multiple printing steps with more than one template. In some examples, curing includes ultraviolet curing or thermal curing. Step 106, injecting a composition into the first mold and covering the pattern layer. In some examples, a quantitative of the composition (including silicone hydrogel or hydrogel) was injected into the concave mold. Step 108, clamping a second mold (e.g. male mold or convex mold) and the first mold. In some examples, male mold was placed on the female mold. Step 110, curing the pattern layer and the composition to form a pearlescent lens. In some examples, the pattern layer and the composition in the first mold and the second mold after clamping were cured with ultraviolet light (UV) for about 10 to 15 minutes, in which the composition includes a photo initiator which includes, but is not limited to benzoin methyl ether, 1-Hydroxy cyclohexyl phenyl ketone, Darocur-^{®}1173 or Igracure-^{®}819. In some examples, the pattern layer and the composition in the first mold and the second mold after clamping were cured with thermal curing, for example, by placing in an oven. Wherein the composition further includes a thermal initiator which includes, but is not limited to 2,2-azo-bis(2,4-dimethylvaleronitrile), 2,2-azo-bis(2-methylpropionitrile), or 1,1-azo-bis(cyanocyclohexane). Step 112, demolding the pearlescent lens. Step 114, soaking the pearlescent lens in the water for hydrating the pearlescent lens. Step 116, sealing the pearlescent lens in a package containing packaging solution, and sterilizing the sealed package.

### Example

### Example 1 Color fixing combination having pearlescent powder and adjuvant

### 1.1 Detection of the fluidity of the color fixing combination

11 kinds of pearlescent powder, presented in weight percentage (wt%), were respectively provided:
Pearlescent powder 1- jewelry gold, particle size 20-200 micrometer

| | |
|---|---|
| calcium aluminum borosilicate | 47-73 wt% |
| silicon dioxide | 8-18 wt% |
| titanium dioxide | 16-26 wt% |
| iron oxide | 3-7 wt% |
| tin oxide | <2 wt% |

Pearlescent powder2- carbon black, particle size 10-60 micrometers

| | |
|---|---|
| iron oxide | 46-54 wt% |
| mica | 36-50 wt% |
| titanium dioxide | 4-10 wt% |

Pearlescent powder 3- black, particle size 5-30 micrometers

| | |
|---|---|
| iron oxide* | 55-70 wt% |
| aluminum oxide | 27-45 wt% |
| silicon dioxide | <3 wt% |

| | |
|---|---|
| *Iron oxide 55-70 wt% includes: iron oxide black 54-70 wt% and iron oxide red<1 wt%. | |

Pearlescent powder 4- silver white, particle size 20-100 micrometers

| | |
|---|---|
| synthetic mica | 75-88 wt% |
| titanium dioxide | 11-21 wt% |
| tin oxide | 1-4 wt% |

| | |
|---|---|
| * Synthetic mica: fluorophlogopite. | |

Pearlescent powder 5- gold, particle size 10-100 micrometers

| | |
|---|---|
| mica | 72-84 wt% |
| titanium dioxide | 12-19 wt% |
| iron oxide | 4-8 wt% |
| tin oxide | <1 wt% |

Pearlescent powder 6- light gold, particle size 10-100 micrometers

| | |
|---|---|
| calcium aluminum borosilicate | 66-81 wt% |
| silicon dioxide | 2-6 wt% |
| titanium dioxide | 17-27 wt% |
| tin oxide | <1 wt% |

Pearlescent powder 7- red/copper/gold, particle size 10-60 micrometers

| | |
|---|---|
| titanium dioxide | 33-44 wt% |
| silicon dioxide | 30-40 wt% |
| mica | 15-37 wt% |
| tin oxide | <1 wt% |

Pearlescent powder 8- brown, particle size 10-60 micrometers

| | |
|---|---|
| mica | 60-68 wt% |
| iron oxide | 32-40 wt% |

Pearlescent powder 9- purple, particle size 10-60 micrometers

| | |
|---|---|
| titanium dioxide | 49-59 wt% |
| silicon dioxide | 12-16 wt% |
| mica | 25-39 wt% |

Pearlescent powder 10- deep purple, particle size 5-50 micrometers

| | |
|---|---|
| silicon dioxide | 81-90 wt% |
| titanium dioxide | 8-14 wt% |
| tin oxide | 2-5 wt% |

Pearlescent powder 11- blue, particle size 10-60 micrometers

| | |
|---|---|
| titanium dioxide | 29-39 wt% |
| silicon dioxide | 29-37 wt% |
| mica | 23-42 wt% |
| tin oxide | <1 wt% |

The above pearlescent powders 1 to 11 were evenly mixed and stirred with the adjuvant for 1 hour, respectively, to form formula 1.1 to formula 1.11. The pearlescent powder accounts for 22 wt%, the adjuvant accounts for 88 wt%, in which the solvent (including glycerol 5 wt%, diethylene glycol 5 wt%, water 30 wt%) accounts for 40 wt%, thickener (including acrylic resin 25 wt%, polymethacrylate 20 wt%) accounts for 45 wt%, hydrophilic polymer including polyvinylpyrrolidone 10 wt%, and dispersant (including polycarboxylic acid 3 wt%, alkylammonium salt 2 wt%) accounts for 5 wt%, based on a total weight (100% by weight) of the adjuvant. Formula 1.1 to formula 1.11 were observed with the naked eye within 4 hours after mixing, whether the formula 1.1 to formula 1.11 (color fixing combinations) have poor fluidity such as solidification and semi-solidification.

The result (data not shown) indicates that the above 11 color fixing combinations (inks) are all fluidity after preparation, and there is no poor fluidity.

### 1.2 Detection of physical size and extraction

After the above formula 1.1 to formula 1.11 were printed on the lens body (please refer to the above manufacturing method, the material is hydrogel, and will not be repeated here), the lens was washed with pure water to remove inorganic salts and the solvent. The lens was dried at 105°C for 17 hours, and the weight of the sample lens (m1) was recorded. The dried lens placed in a cylindrical filter paper was placed in a Soxhlet extraction tube, and an extraction solvent (such as water or n-hexane) was added into a round-bottomed flask for heating and boiling extraction for 4 hours. After extraction, the lens was dried at 105°C for 17 hours, and the weight of the sample lens (m2) was recorded. Calculation of extraction (%): [(m1-m2)/m1] x 100%. Criteria: water or n-hexane extraction rate should be <1%.

**Table1**

| Color fixing combinatio n | Pigment color | Diameter (DIA) | Base curve (BC) | Center thickness (CT) | Power | Extraction (%) | |
|---|---|---|---|---|---|---|---|
| | | | | | | Di-water (DIW) | Hexane (Hex) |
| | | Specification (Spc.) 14.1±0.2 | Specification (Spc.) 8.6±0.2 | Specification (Spc.) 0.08±0.018 | Specification (Spc.) -3.00±0.25D | Specificati on <1% | Specificatio n <1% |
| Formula 1.1 | Jewelry gold | 14.20 | 8.56 | 0.086 | -2.91 | 0.22 | 0.15 |
| Formula 1.2 | Carbon black | 14.21 | 8.70 | 0.087 | -2.83 | 0.48 | 0.12 |
| Formula 1.3 | Black | 14.21 | 8.70 | 0.087 | -2.85 | 0.54 | 0.25 |
| Formula 1.4 | Silver white | 14.26 | 8.74 | 0.087 | -2.81 | 0.62 | 0.22 |
| Formula 1.5 | Gold | 14.21 | 8.72 | 0.086 | -2.89 | 0.44 | 0.16 |
| Formula 1.6 | Light gold | 14.16 | 8.58 | 0.087 | -3.06 | 0.24 | 0.15 |
| Formula 1.7 | Red/ Copper/ Gold | 14.20 | 8.61 | 0.085 | -3.04 | 0.04 | 0.00 |

As shown in above Table 1, the physical size conforms to the specification, which means that the lenses will not be deformed after the preparation of the pearlescent contact lenses. Furthermore, the above lenses after various color fixing combination printing, water or n-hexane extraction are all less than 1%, so the lenses will not dissolve the color fixing combination (ink) and are safe.

### 1.3 Color fade test

After the above formula 1.1 to formula 1.11 were printed on the lens body (please refer to the above manufacturing method, the material is hydrogel, and will not be repeated here), the lens bodies of formula 1.1 to formula 1.11 were dipped with the preservation solution by cotton swabs. Then the lens bodies were wiped from the optical center area to the outside by the abdomens of the cotton swabs for 10 times, and the cotton swabs were visually checked whether the cotton swabs were stained and the lens patterns were confirmed. Criteria: the cotton swab was visually observed, if the cotton swab is colored, the lens body is discolored.

The result (data not shown) indicates that the cotton swabs wiping the lens bodies of formula 1.1 to formula 1.11 are not colored, indicating that the lens bodies are not discolored. Therefore, the color fixing composition is safe and has excellent color-fixing ability during the manufacturing process of printing the color fixing composition onto the lens body.

### 1.4 Detection of cytotoxicity

Cytotoxicity is one of the biocompatibility assessment methods for evaluating the response of medical devices or biomedical materials to the human body when they are in contact with the human body indirectly or directly. The experimental method and operation method should refer to the ISO10993-5 standard, and the cell viability at the 24th hour after adding the test substance was analyzed by the cell viability assay (MTT assay). If the cell viability is greater than 70%, it means no toxicity.

**Table 2**

| Color fixing combination | Lens color | Cell viability (%) |
|---|---|---|
| | | Specification (Spc.) >70% |
| Formula 1.1 | Jewelry gold | 84.0% |
| Formula 1.2 | Carbon black | 85.5% |
| Formula 1.3 | Black | 83.3% |
| Formula 1.4 | Silver white | 85.6% |
| Formula 1.5 | Gold | 86.6% |
| Formula 1.6 | interference color-Gold | 73.2% |
| Formula 1.7 | Red/Copper/Gold | 75.6% |

As shown in above Table 2, the above lenses after various color fixing combination printing, the cell viability is >70%. Therefore, the above lenses after various color fixing combinations printing are non-toxic and safe.

### Example 2 Color fixing combination having pearlescent powder, inorganic color powder and/or organic color powder, and adjuvant

20 kinds of color fixing combinations including pearlescent powder, inorganic color powder and/or organic color powder, and adjuvant are provided. The manufacturing method are similar to Example 1, the pearlescent powder, inorganic color powder and/or organic color powder were evenly mixed and stirred with the adjuvant (the same as Example 1) in the weight percentage (wt%) of the following Table 3 for 1 hour to form formula 2.1 to formula 2.20. Formula 2.1 to formula 2.20 were observed with the naked eye within 4 hours after mixing, whether the formula 2.1 to formula 2.20 (color fixing combinations) have poor fluidity such as solidification and semi-solidification. Inorganic color powder (red) is iron oxide red, inorganic color powder (black) is iron oxide black, inorganic color powder (white) is titanium dioxide, organic color powder (blue) is phthalocyanine color powder, organic color powder (purple) is triphenodioxazine color powder, and inorganic color powder (yellow) is iron oxide yellow.

**Table 3**

| Formula | Pearlescent powder | Account for weight percentage | Inorganic color powder and/or organic color powder | Account for weight percentage | Adjuvant weight percentage | State after ink preparation |
|---|---|---|---|---|---|---|
| 1.3 | Pearlescent powder 3 | 22% | - | 0% | 88% | Fluidity |
| 2.1 | | 40% | inorganic color powder (red) | 4% | 56% | Solidification |
| 2.2 | | 40% | inorganic color powder (black) | 4% | 56% | Solidification |
| 2.3 | | 20% | inorganic color powder (red) | 4% | 76% | Fluidity |
| 2.4 | | 40% | inorganic color powder (red) | 1% | 59% | Solidification |
| 2.5 | | 40% | inorganic color powder (white) | 4% | 56% | Solidification |
| 2.6 | | 40% | organic color powder (blue) | 4% | 56% | Fluidity |
| 2.7 | | 40% | organic color powder (blue) | 4% | 56% | Fluidity |
| 2.8 | | 40% | organic color powder (purple) | 4% | 56% | Fluidity |
| 2.9 | Pearlescent powder 9 | 22% | inorganic color powder (red) | 4% | 74% | Fluidity |
| 2.10 | | 20% | inorganic (white) | 1% | 76% | Fluidity |
| | | | organic (purple) | 3% | | |
| 2.11 | | 20% | inorganic (yellow) | 4% | 68% | Fluidity |
| | | | inorganic (white) | 4% | | |
| | | | organic (purple) | 4% | | |
| 2.12 | Pearlescent powder 7 | 22% | inorganic (white) | 4% | 74% | Fluidity |
| 2.13 | | 22% | inorganic (red) | 4% | 74% | Fluidity |
| 2.14 | | 22% | organic (blue) | 4% | 74% | Fluidity |
| 2.15 | | 20% | inorganic | 4% | 68% | Fluidity |
| | | | (yellow) | 4% | | |
| | | | inorganic (white) organic (green) | 4% | | |
| 2.16 | Pearlescent powder 11 | 22% | inorganic (black) | 4% | 74% | Fluidity |
| 2.17 | | 22% | organic (blue) | 3% | 74.2% | Fluidity |
| | | | inorganic (white) | 0.8% | | |
| 2.18 | | 20% | inorganic(yellow) | 4% | | |
| | | | inorganic (white) | 4% | 68% | Fluidity |
| | | | organic (blue) | 4% | | |
| 2.19 | Pearlescent powder 7 | 10% | inorganic (red) | 11% | 61% | Fluidity |
| | | | inorganic (white) | 16% | | |
| | | | organic (purple) | 2% | | |
| 2.20 | | 32% | inorganic (red) | 2% | 54% | Fluidity |
| | | | inorganic (black) | 12% | | |

The result (data not shown) indicates that the above 20 color fixing combinations (inks): including 40% of the pearlescent powder and 4% of the organic color powder were not solidification; including 20% of the pearlescent powder and 4% of the inorganic color powder were not solidification; including 22% of the pearlescent powder and 12% of the organic and the inorganic color powders were not solidification; including 32% of the pearlescent powder and 14% of the inorganic color powder were not solidification. However, when the pearlescent powder accounts for 40% and the inorganic color powder accounts for 1% to 4%, the color fixing combinations were solidification during stirring and cooling within 4 hours, so that the solidified inks cannot be printed on the lens.

In the present disclosure, the pearlescent powder is stably adhered to the colored layer of the lens through a color fixing system to increase wearing safety, and at the same time, lens exhibits specific patterns and colors by the color fixing combination.

## Claims

1. A color fixing combination for contact lens, **characterized in that**, comprising:
a pearlescent powder; and
an adjuvant comprising at least two of: alcohols, amines, ketones, alkenes, esters, resins, polyamides, celluloses, polyacids, ammonium salts, phosphoric acids, alkene acids, or silanes.

2. The color fixing combination for contact lens of claim 1, wherein the adjuvant further comprises:
a solvent comprising alcohols, amines, ketones, alkenes, esters, or a combination thereof;
a thickener comprising polyacrylate, polymethacrylate, polystyrene and its derivatives, polyamides, or a combination thereof;
a hydrophilic polymer comprising polyvinyl alcohol, cellulose and its derivatives, polyethylene alcohol, polyvinylpyrrolidone and its copolymer, hydroxyapatite, or a combination thereof; and
a dispersant comprising polyacids, ammonium salts, phosphoric acids, alkene acids, silanes, or a combination thereof.

3. The color fixing combination for contact lens of claim 2,
wherein the polyacids comprises polycarboxylic acid,
wherein the ammonium salts comprises alkyl trimethyl benzyl ammonium salt, dialkyl dimethyl ammonium salt, or alkylammonium salt,
wherein the phosphoric acids comprises phosphoric acid ester, trisodium phosphate, or sodium pyrophosphate,
wherein the alkene acids comprises acrylic ester or ethylene glycol dimethacrylate, and
wherein the silanes comprises vinyltrimethoxysilane, triethoxyvinylsilane, or triisopropoxyvinylsilane.

4. The color fixing combination for contact lens according to any one of claims 1 to 3, wherein the pearlescent powder comprises mica, calcium aluminum borosilicate, aluminum oxide, or silicon dioxide as a substrate, and a surface of the substrate is covered with titanium dioxide, iron oxide, tin oxide, or a combination thereof.

5. The color fixing combination for contact lens of claim 1, wherein
the pearlescent powder has a weight percentage from 5% to 40%; and
the adjuvant has a weight percentage from 60% to 95%,
based on a total weight (100% by weight) of the color fixing combination.

6. The color fixing combination for contact lens of claim 1, further comprising an inorganic color powder, an organic color powder, or a combination thereof.

7. The color fixing combination for contact lens of claim 6, wherein the inorganic color powder comprises a titanium dioxide color powder, a titanium-phenol color powder, an iron oxide color powder, or a combination thereof.

8. The color fixing combination for contact lens of claim 6, wherein
the pearlescent powder has a weight percentage from 15% to less than 40%;
the inorganic color powder has a weight percentage from 1% to 20%; and
the adjuvant has a weight percentage from 40% to 85%,
based on a total weight (100% by weight) of the color fixing combination.

9. The color fixing combination for contact lens of claim 6, wherein the organic color powder comprises a disazo color powder, a monoazo color powder, a phthalocyanine color powder, a triphenodioxazine color powder, or a combination thereof.

10. The color fixing combination for contact lens of claim 6, wherein
the pearlescent powder has a weight percentage from 15% to 40%;
the organic color powder has a weight percentage from 1% to 4%; and
the adjuvant has a weight percentage from 40% to 85%,
based on a total weight (100% by weight) of the color fixing combination.

11. The color fixing combination for contact lens of claim 6, wherein
the pearlescent powder has a weight percentage from 10% to 30%;
the inorganic color powder has a weight percentage from 1% to 30%;
the organic color powder has a weight percentage from 1% to 4%; and
the adjuvant has a weight percentage from 40% to 85%,
based on a total weight (100% by weight) of the color fixing combination.

12. A method of manufacturing pearlescent lens, **characterized in that**, comprising steps of:
providing a color fixing combination as claimed in any one of claims 1 to 11;
filling the color fixing combination in to a template to form a colloid layer;
printing the colloid layer into a first mold to form a pattern layer after curing;
injecting a composition into the first mold and covering the pattern layer; and
curing the pattern layer and the composition to form the pearlescent lens.

13. The method of claim 12, wherein the composition comprises hydrogel or silicone hydrogel.

14. The method of claims 12 or 13, wherein after the step of injecting a composition into the first mold and covering the pattern layer, the method further comprises clamping a second mold and the first mold.

15. A contact lens having pearlescent with color fixing combination, **characterized in that**, comprising:
a lens body; and
a pattern layer covering the lens body, wherein the pattern layer is formed by curing the color fixing combination as claimed in any one of claims 1 to 11.
